# EUROPÄISCHE PATENTANMELDUNG

(11) **EP 1 785 257 A2**
(43) Veröffentlichungstag der Anmeldung: **16.05.2007**
(21) Anmeldenummer: 06121105.8
(22) Anmeldetag: 22.09.2006
(51) Int. Cl.: B29C 45/67

(54) **Schließvorrichtung für eine Spritzgießmaschine**

(30) Priorität: 11.11.2005 DE 102005053802
(71) Anmelder: Demag Ergotech GmbH, 90571 Schwaig (DE)
(72) Erfinder: Kanter, Matthias, 99510, Obertrebra (DE); Henke, Kerstin, 99439, Großobringen (DE)
(74) Vertreter: Maierl, Christine

(57) **Zusammenfassung**

Die vorliegende Erfindung betrifft Schließvorrichtung für eine Spritzgießmaschine mit einer beweglichen Formaufspannplatte (2), die Antriebsmittel zum Verfahren der beweglichen Formaufspannplatte (2) in mindestens einer Richtung aufweist, und mindestens einen Schließzylinder (4) und einen in diesem beweglich gelagerten Schließkolben (6) sowie mindestens einen Ausgleichszylinder (16) und einen in diesem beweglich gelagerten Ausgleichskolben (18).

Aufgabe der vorliegenden Erfindung ist es, eine Schließvorrichtung für eine Spritzgießmaschine sowie ein Verfahren zum Betreiben einer solchen vorzustellen, die einfach im Aufbau und unkompliziert im Betrieb ist, bei gleichzeitig hoher Funktionssicherheit und guter Dynamik.

Diese Aufgabe wird durch eine Schließvorrichtung gelöst, bei der eine direkte, schaltbare Verbindung zwischen einem ersten Kolbenraum (8) des mindestens einen Schließzylinders (4) und einem Ausgleichsraum (20) des mindestens einen Ausgleichszylinders (16) vorgesehen ist. Hierbei werden erster Kolbenraum (8) und Ausgleichsraum (20) in direkte Strömungsverbindung gebracht, so dass aus dem einen Raum verdrängtes Fluid im wesentlichen von dem zweiten Raum aufgenommen wird.

## Beschreibung

Die vorliegende Erfindung betrifft eine Schließvorrichtung für eine Spritzgießmaschine mit einer beweglichen Formaufspannplatte, die Antriebsmittel zum Verfahren der beweglichen Formaufspannplatte in mindestens einer Richtung aufweist, sowie mindestens einen Schließzylinder und einen in diesem beweglich gelagerten Schließkolben sowie mindestens einen Ausgleichszylinder und einen in diesem beweglich gelagerten Ausgleichskolben.

Schließvorrichtungen für Spritzgießmaschinen dienen gewöhnlich dem Schließen einer sogenannten Form, deren Formhälften auf Formaufspannplatten angebracht sind, die in einem Schließvorgang aufeinanderzubewegt werden, sowie dem Aufbringen des sogenannten Schließdrucks. In einem geschlossenen Zustand, also bei zusammengefahrenen Formaufspannplatten, bilden die Formhälften eine Formkavität, in die unter Aufbringen des Schließdrucks beispielsweise thermoplastisches Material einspritzbar ist, um so einen Formkörper zu bilden. Nach einem Verfestigen bzw. Aushärten des eingespritzten Materials werden die Formhälften geöffnet, die Formaufspannplatten also auseinandergefahren und der fertige Formkörper wird entnommen. Es gibt eine Vielzahl unterschiedlich ausgestalteter Schließvorrichtungen, die jeweils zumindest eine bewegliche und eine zweite, zumeist fest angeordnete Formaufspannplatte aufweisen.

Häufig ist eine sogenannte 3-Platten-Anordnung zu finden, mit einer Abstützplatte und einer festen Formaufspannplatte, zwischen denen die bewegliche Formaufspannplatte relativ zur festen Formaufspannplatte hin und weg bewegbar ist. Oft findet sich eine Führung der beweglichen Formaufspannplatte über Säulen bzw. Holmen, die auch der Kraftübertragung zwischen der Abstützplatte und der festen Formaufspannplatte dienen.

Die Bewegung der beweglichen Formaufspannplatte kann beispielsweise mechanisch, hydraulisch oder auch mittels einer Vermengung der verschiedenen Antriebsarten erfolgen.

Aus der DE 40 18 334 C1 ist es beispielsweise bekannt, bei einer Hydraulikeinrichtung einer Schließvorrichtung für eine Spritzgießmaschine das Geschwindigkeits- und Druckprofil der Schließbewegung beim Schließen der Form mindestens durch drei, zeitlich aufeinander folgende Schaltstellungen mittels eines 4/4-Wegeventils bestimmbar auszugestalten. Über eine Vielzahl weiterer Wegeventile kann hierbei einerseits die Druckbeaufschlagung unterschiedlicher Kolbenräume und andererseits auch die Schaltstellung von Ventilen beeinflusst werden. Generell handelt es sich hierbei um eine, sowohl aus mechanischer als auch aus schaltungstechnischer Sicht, sehr komplexe Anordnung. Eine Vielzahl von Sensoren und Aktoren müssen individuell berücksichtigt werden.

Des weiteren ist es beispielsweise auch bekannt, bei einer Schließbewegung einen Aktivzylinder kleiner Zylinderkolbenfläche, der mit einem zweiten Kolben größeren Durchmessers mechanisch starr gekoppelt ist, mit Druck zu beaufschlagen. Der zweite Kolben beaufschlagt aufgrund der durch ihn verdrängten Ölmenge den Schließzylinder und bewirkt dessen Bewegung in Schließrichtung. Die zweite Zylinder-Kolben-Anordnung wirkt hierbei als Mengenübersetzer. Dieser ist mit dem Schließzylinder hydraulisch gekoppelt. Aufgrund der hydraulischen Kopplung muss zu jedem Arbeitszeitpunkt sichergestellt sein, dass das Verhältnis der Ölmengen in Mengenübersetzer und Schließzylinder korrekt ist, damit der volle Hub der beweglichen Formaufspannplatte fahrbar ist. Unvermeidliche Leckagen im System müssen aktiv ausgeglichen werden, da sonst wegen der Verluste in der Ölmenge nach wenigen Zyklen zu wenig im Mengenübersetzer-Schließzylinder-System vorhanden und der volle Hub nicht fahrbar wäre. Hierfür werden zusätzliche Wegerfassungssysteme sowie Ventile zum Befüllen bzw. Regulieren des im Mengenübersetzer vorhandenen Öls notwendig. Zudem muss ein übergeordnetes Regelungssystem für die Steuerung bereitgestellt werden.

Nachteilig hieran ist aus dynamischer Sicht weiterhin die Reihenschaltung von Aktivzylinder, Mengenübersetzer und Schließzylinder, da insbesondere die Ölsäule im System Mengenübersetzer-Schließzylinder eine Schwingungsneigung aufweist. Um diese zu verringern muss das System aktiv gedämpft werden, wodurch der Energieverbrauch erhöht wird.

Aufgabe der vorliegenden Erfindung ist es deshalb, eine Schließvorrichtung für eine Spritzgießmaschine vorzustellen, die einfach im Aufbau und unkompliziert im Betrieb ist, bei gleichzeitig hoher Funktionssicherheit und guter Dynamik.

Diese Aufgabe wird durch eine Schließvorrichtung für eine Spritzgießmaschine mit einer beweglichen Formaufspannplatte, die Antriebsmittel zum Verfahren der beweglichen Formaufspannplatte in mindestens einer Richtung aufweist, sowie mindestens einen Schließzylinder und einen in diesem beweglich gelagerten Schließkolben sowie mindestens einen Ausgleichszylinder und einen in diesem beweglich gelagerten Ausgleichskolben, wobei eine direkte, schaltbare Verbindung zwischen einem ersten Kolbenraum des mindestens einen Schließzylinders und einem Ausgleichsraum des mindestens einen Ausgleichszylinders vorgesehen ist.

Erfindungsgemäß kann eine Schließvorrichtung eine direkte, schaltbare Verbindung zwischen einem ersten Kolbenraum des mindestens einen Schließzylinders und einem Ausgleichsraum des mindestens einen Ausgleichszylinders aufweisen. Hierunter wird eine Verbindung verstanden, die den ersten Kolbenraum unmittelbar mit dem Ausgleichsraum verbindet, und die schaltbar ist, so dass eine Strömungsverbindung zwischen den beiden Räumen zumindest herstellbar und unterbrechbar ist. Vorteilhaft hieran ist, dass bei einer Verfahrbewegung der beweglichen Formaufspannplatte bei gleichzeitig hergestellter Verbindung ein Austausch zwischen dem ersten Kolbenraum und dem Ausgleichsraum herbeiführbar ist. Hierbei kann im Betrieb in den Räumen beispielsweise ein Fluid und insbesondere Hydrauliköl vorgesehen sein. Durch die erfindungsgemäße Ausgestaltung ist es möglich, das Fluid im wesentlichen in dem aus dem mindestens einen Schließzylinder und dem mindestens einen Ausgleichszylinder gebildeten System zu halten. Insbesondere können beispielsweise bei Vorsehen nur eines einzigen Schließzylinders mit darin gelagertem Schließkolben zwei Ausgleichszylinder mit darin gelagerten Ausgleichskolben vorgesehen sein, wobei der Schließzylinder bevorzugt eine im Hinblick auf die Formaufspannplatte zentrale Position einnehmen kann. Die Ausgleichszylinder können dann beispielsweise diagonal zum Schließzylinder angeordnet sein. Hier kann die direkte, schaltbare Verbindung zwischen einem ersten Kolbenraum des Schließzylinders und den Ausgleichsräumen der beiden Ausgleichszylinder vorgesehen sein.

Es ist auch denkbar, beispielsweise zwei Schließzylinder mit einem einzigen mittig in Bezug auf die Formaufspannplatte angeordneten Ausgleichszylinder vorzusehen, wobei eine direkte, schaltbare Verbindung zwischen den ersten Kolbenräumen der beiden Schließzylinder und einem Ausgleichsraum des Ausgleichszylinders vorgesehen ist.

Bei Vorsehen von zwei Schließzylindern und zwei Ausgleichszylindern können entweder die beiden ersten Kolbenräume der Schließzylinder mit beiden Ausgleichsräumen über eine direkte, schaltbare Verbindung verbunden sein, oder aber auch jeweils nur ein erster Kolbenraum mit einem Ausgleichsraum.

Die genaue Anzahl und relative Anordnung von Schließzylinder und Ausgleichszylinder kann abhängig vom jeweiligen Einsatzfall und den dort benötigten Schließkräften und anderen Parametern gewählt werden.

Bei dem ersten Kolbenraum des mindestens einen Schließzylinders kann es sich bevorzugt um einen sogenannten Hochdruckraum desselben handeln, worunter der Kolbenraum verstanden wird, in dem beim Erzeugen des Schließdrucks in einer Geschlossenstellung der Formaufspannplatten ein hoher Druck vorzusehen ist. Somit kann das bei einer Schließstellung der Schließvorrichtung im ersten Kolbenraum des mindestens einen Schließzylinders vorhandene Fluid bei einer Verfahrbewegung der Formaufspannplatte durch Schalten der Verbindung zwischen diesem ersten Kolbenraum und einem Ausgleichsraum des mindestens einen Ausgleichszylinders zumindest teilweise in diesen umgelagert werden.

Gemäß einer vorteilhaften Weiterbildung der Erfindung können der erste Kolbenraum des mindestens einen Schließzylinders und der Ausgleichraum des mindestens einen Ausgleichszylinders über eine, insbesondere mittels eines Absperrventils, schaltbare Verbindungsleitung verbindbar sein. Das Vorsehen einer solchen Verbindungsleitung stellt eine besonders einfache konstruktive Maßnahme zum Bereitstellen einer direkten, schaltbaren Verbindung zwischen dem ersten Kolbenraum und dem Ausgleichsraum dar. Im Falle mehrerer Schließzylinder bzw. mehrerer Ausgleichszylinder ist die Verbindung zwischen dem oder den jeweiligen ersten Kolbenräumen bzw. Ausgleichsräumen einfach mittels solcher Verbindungsleitungen verwirklichbar. Vorteilhafterweise können die Verbindungsleitung bzw. die Verbindungsleitungen nicht zu lang gewählt sein, der Durchmesser ist in Abhängigkeit von den zu transportierenden Fluidmengen zu wählen.

Gemäß einer vorteilhaften Weiterbildung der vorliegenden Erfindung können der mindestens eine Schließzylinder und der darin beweglich gelagerte Schließkolben sowie der mindestens eine Ausgleichszylinder und der darin beweglich gelagerte Ausgleichskolben derart ausgebildet sein, dass eine Volumenänderung des Ausgleichsraums bei einem Verfahren der beweglichen Formaufspannplatte entgegengesetzt zu einer Volumenänderung des ersten Kolbenraums des Schließzylinders ist. So kann bei einer Öffnungsbewegung der Schließvorrichtung eine Verkleinerung des mindestens einen ersten Kolbenraums erfolgen, während gleichzeitig eine Vergrößerung des mindestens einen Ausgleichsraums erfolgt. Hierbei handelt es sich im wesentlichen um eine Kopplung der Volumenänderung des ersten Kolbenraums sowie des Ausgleichsraums.

Besonders vorteilhafterweise können der mindestens eine Schließzylinder und der darin beweglich gelagerte Schließkolben sowie der mindestens eine Ausgleichszylinder und der darin beweglich gelagerte Ausgleichskolben derart ausgebildet sein, dass die Volumenänderung des Ausgleichsraums im wesentlichen entgegengesetzt identisch zu der Volumenänderung des ersten Kolbenraums ist. Hierdurch kann gewährleistet werden, dass beispielsweise in den Räumen vorhandenes Fluid im wesentlichen im System verbleibt, so dass über eine Vielzahl von Öffnungs- und Schließbewegungen der Schließvorrichtung nur eine geringe Menge an Fluid neu zugeführt werden muss. Insbesondere kann im Fall der Ausgestaltung des ersten Kolbenraums des mindestens einen Schließzylinders als Hochdruckraum eine Pumpe geringerer Pumpleistung für das Beaufschlagen des ersten Kolbenraums mit Druck in der Schließstellung vorgesehen werden, da sie nur geringe Fluidmengen, den sogenannten Kompressionsteil, fördern muss. Durch das Zuführen dieses Kompressionsteils bei jedem Schließdruckaufbau kann im wesentlichen auch ein ausreichender Fluidaustausch gewährleist werden, um einer Erwärmung oder Verschmutzung des Fluids entgegenzuwirken.

Der Ausgleichsraum, bei dem es sich um einen Kolbenraum des Ausgleichszylinder-Ausgleichskolben-Systems handelt, erfüllt hierbei eine Art Bevorratungsfunktion oder auch Umsetzfunktion. So kann beispielsweise bei einer Schließbewegung der Schließvorrichtung aufgrund einer negativen Volumenänderung des Ausgleichsraums aus diesem verdrängtes Fluid direkt über die schaltbare Verbindung in den ersten Kolbenraum des mindestens einen Schließzylinders überführt werden, wobei aufgrund der direkten Verbindung Leckagen im wesentlichen ausschließbar bzw. zumindest minimierbar sind. Gegebenenfalls doch durch Leckagen auftretende Fluidverluste können bei einer darauffolgenden Druckbeaufschlagung durch den Kompressionsteil ausgeglichen werden.

Entsprechend einer weiteren vorteilhaften Ausgestaltung der erfindungsgemäßen Schließeinheit können der mindestens eine Schließkolben und der mindestens eine Ausgleichskolben fest gekoppelt sein. Diese Kopplung kann beispielsweise über ein Anlenken der beiden an der beweglichen Formaufspannplatte erfolgen. Alternativ können Schließ- und Ausgleichskolben beispielsweise auch im Bereich eines Maschinenbettes oder aber einer Abstützplatte gekoppelt sein, während dann eine Anordnung des Schließzylinders und des Ausgleichszylinders an der beweglichen Formaufspannplatte in Frage käme. Vorteilhaft an dieser Zwangskopplung ist, dass es zu keiner Reihenschaltung der einzelnen Zylinder kommt, wodurch auch eine eventuell auftretende Schwingneigung des in den Zylinderräumen vorgesehenen Hydraulikfluids effektiv unterbunden werden kann. Die starre Verbindung der beiden Kolben trägt weiterhin zur einfachen konstruktiven Gestaltung der erfindungsgemäßen Schließvorrichtung bei und erleichtert die Ansteuerung derselben auch aufgrund der verringerten Schwingungsneigung der Fluidsäulen in den einzelnen Kolbenräumen.

Im Fall einer festen Anlenkung des mindestens einen Schließkolbens und des mindestens einen Ausgleichskolbens an der beweglichen Formaufspannplatte kann der erste Kolbenraum des Schließzylinders auf einer der beweglichen Formaufspannplatte abgewandten Seite ausgebildet sein, während der Ausgleichsraum des Ausgleichszylinders auf einer der beweglichen Formaufspannplatte zugewandten Seite ausgebildet sein kann. Hierdurch wird bei einer Bewegung der beweglichen Formaufspannplatte in Richtung Formschluss, also von dem Schließ- und dem Ausgleichszylinder weg, der erste Kolbenraum vergrößert, während wegen der starren Verbindung zwischen den beiden Kolben der Ausgleichsraum verkleinert wird. So wird eine gegenläufige Volumenänderung der beiden Kolbenräume gewährleistet, die bei entsprechender konstruktiver Ausgestaltung in identisch entgegengesetzter Volumenänderung resultiert. Der Ausgleichsraum kann somit eine Reservoirfunktion für bei Formschluss im ersten Kolbenraum benötigtes Fluid erfüllen. Die Bewegung des Ausgleichskolbens im Ausgleichszylinder ist einer Art Umsetzfunktion vergleichbar, da durch die Bewegung Fluid vom Ausgleichsraum in den ersten Kolbenraum umgesetzt wird.

Gemäß einer vorteilhaften Ausgestaltung der vorliegenden Erfindung kann ein Mehrwegeventil vorgesehen sein, mittels dessen der erste Kolbenraum des mindestens einen Schließzylinders über eine Druckleitung mit Druck zum Erzeugen eines Schließdrucks beaufschlagbar oder mit einem Tank verbindbar oder abschottbar ist. So kann während einer Schließ- oder einer Öffnungsbewegung der Schließvorrichtung das Mehrwegeventil geschlossen, die Druckleitung also abgeschottet sein, und ein Fluidtransfer zwischen Ausgleichsraum und erstem Kolbenraum über die direkte, in diesem Fall auf offen geschaltete Verbindung erfolgen. Nach Beendigung einer Schließbewegung, d. h. bei geschlossener Form, kann über das Mehrwegeventil eine Verbindung der Druckleitung mit einer Druckquelle, beispielsweise einer Pumpe oder einer Druckleitung eines Hydrauliksystems, bereitstellbar sein. Zu diesem Zeitpunkt ist die Verbindung zwischen erstem Kolbenraum und Ausgleichsraum bevorzugt geschlossen, um eine gleichzeitige Beaufschlagung des Ausgleichsraums mit Druck zu vermeiden. Durch Druckbeaufschlagung des ersten Kolbenraums, der in diesem Fall ein Hochdruckraum des Schließzylinders ist, kann somit der Schließdruck aufgebracht werden. Hierbei kann eine Verbindbarkeit des Ausgleichsraums mit einem Tank bzw. einer Tankleitung des Hydrauliksystems vorgesehen sein, um in diesem einen übermäßigen Druckaufbau zu vermeiden. Gleichzeitig kann hierdurch ein Druckausgleich im Ausgleichsraum ermöglicht werden. Auch bei einer Verfahrbewegung kann es vorteilhaft sein, den mindestens einen Ausgleichsraum gleichzeitig mit der Tankleitung des Hydrauliksystems zu verbinden, um beispielsweise eventuelle Volumenschwankungen des Fluids aufgrund von Temperaturänderungen oder ähnlichem auszugleichen. Insbesondere kann bei einer Öffnungsbewegung eine Verbindbarkeit des Systems aus Ausgleichsraum und erstem Kolbenraum mit dem Tank oder der Tankleitung von Vorteil sein, um einen dem Kompressionsteil vom Schließdruckaufbau entsprechenden Fluidanteil aus dem System in den Tank abzuführen. Diese Verbindung zu dem Tank kann auch über das Mehrwegeventil erfolgen, in der Rückführleitung kann beispielsweise ein Rückschlagventil vorgesehen sein, um eine übermäßige Fluidrückfuhr in den Tank zu vermeiden.

Eine Verbindbarkeit des ersten Kolbenraums mit einem Tank bzw. einer Tankleitung eines Hydrauliksystems kann ferner beispielsweise bei Abschlussarbeiten, wie einer Stilllegung der Schließvorrichtung, von Vorteil sein, denn so kann bei geschlossener Verbindung zum Ausgleichsraum bei einer Öffnungsbewegung der Schließvorrichtung Fluid in den Tank gefördert werden. Auch kann eine Verbindung zum Tank beispielsweise während des Betriebs und bei geöffneter Verbindung zwischen den Kolbenräumen vorteilhaft sein, um einen Fluidaustausch zu ermöglichen.

Im zyklischen Betrieb der erfindungsgemäßen Schließvorrichtung kann bereits die jeweils beim Aufbringen des Schließdrucks neu hinzugeführte geringe Fluidmenge ausreichen, um bei Berücksichtigung entsprechender Leckagen eine ausreichende Durchmischung des Fluids zu gewährleisten und Verschmutzungsgrad sowie Temperatur desselben im Betriebsbereich zu halten. Somit kann durch den sogenannten Kompressionsanteil beim Schließdruckaufbau und die Abfuhr eines entsprechenden Fluidanteils bei der anschließenden Öffnungsbewegung in den Tank ein im wesentlichen ausreichender Fluidaustausch gewährleistet werden. Weitere Leckageverluste bzw. eventuelle Fluidüberschüsse können jeweils durch Verbindungen zum Tank ausgeglichen werden.

Erfindungsgemäß kann ein zweiter Kolbenraum des mindestens einen Schließzylinders über eine Versorgungsleitung wahlweise mit Druck, insbesondere zum Erzeugen einer Öffnungsbewegung, beaufschlagbar oder mit einem Tank bzw. einer Tankleitung eines Hydrauliksystems verbindbar sein. Durch das Beaufschlagen des zweiten Kolbenraums des mindestens einen Schließzylinders kann, insbesondere bei Einsatz von nur einseitig in Schließrichtung wirkenden Antriebsmitteln, die Schließvorrichtung geöffnet werden. Bei einer solchen Öffnungsbewegung kann erfindungsgemäß die schaltbare Verbindung zwischen erstem Kolbenraum und Ausgleichsraum geöffnet sein, so dass im ersten Kolbenraum vorhandenes Fluid im wesentlichen in den Ausgleichsraum umgesetzt wird, hierbei kann vorteilhafterweise eine Verbindung zum Tank vorgesehen sein, über die überschüssiges Fluid abgeführt werden kann.

Beispielsweise kann in diesem Fall der mindestens eine Schließkolben als zweiseitig wirkender Kolben ausgestaltet sein und der zweite Kolbenraum ein die Kolbenstange des Schließkolbens umgebender Ringraum sein. Je nach Dimensionierung kann der zweite Kolbenraum relativ kleine Kolbenwirkflächen aufweisen, so dass nur geringe Fluidmengen zum Erzeugen der Verfahrbewegung aufzubringen sind. Bei einer entgegengesetzten Schließbewegung der Schließvorrichtung kann der zweite Kolbenraum des mindestens einen Schließzylinders mit einem Tank verbunden sein, so dass aufgrund der Volumenverkleinerung des zweiten Kolbenraums verdrängtes Fluid in den Tank überführbar ist.

Gemäß einer vorteilhaften Ausgestaltung der vorliegenden Erfindung können die Antriebsmittel einerseits an einem Gehäuse, insbesondere einem Deckel, des mindestens einen Ausgleichszylinders und andererseits an dem mindestens Ausgleichskolben angreifen. Durch diese Anordnung der Antriebsmittel wird eine kompakte Bauweise der erfindungsgemäßen Schließvorrichtung gewährleistet, da es beispielsweise möglich ist, die Antriebsmittel im wesentlichen in einem Bereich des Ausgleichszylinders anzuordnen, der im Betrieb nicht bzw. nicht zwangsweise mit Fluid gefüllt ist. Der Ausgleichszylinder kann an einem feststehenden Maschinenelement, wie einer Abstützplatte oder einem Maschinenbett, angeordnet sein, während der Ausgleichskolben relativ hierzu verschieblich gelagert und beispielsweise mit der beweglichen Formaufspannplatte verbunden ist, so dass die Antriebsmittel genau zwischen diesen bewegten bzw. festen Elementen angreifen können.

In einer vorteilhaften Ausgestaltung der erfindungsgemäßen Schließvorrichtung können die Antriebsmittel einen Aktivkolben umfassen. Dieser kann beispielsweise einseitig wirkend oder aber auch zweiseitig wirkend ausgebildet sein, so dass beispielsweise nur eine Schließbewegung oder aber eine Schließ- und eine Öffnungsbewegung durch den Aktivkolben erzeugbar sind. Vorteilhaft bei der Verwendung eines Aktivkolbens ist zudem, dass es sich hierbei um ein hydraulisches Antriebsmittel handelt. Das für die Erzeugung der Schließkraft bereits vorgesehene Hydrauliksystem kann somit auch für die Beaufschlagung des Aktivkolbens genutzt werden. Es ist jedoch auch möglich, aufgrund der unterschiedlichen Leistungsanforderungen beispielsweise mehrere Pumpen zum Beaufschlagen der verschiedenen Kolbenräume vorzusehen.

Gemäß einer besonders vorteilhaften Ausgestaltung kann der Aktivkolben mit dem Gehäuse, und insbesondere dem Deckel, des mindestens einen Ausgleichszylinders verbunden und in dem mindestens einem Ausgleichskolben ein Kolbenraum für den Aktivkolben ausgebildet sein. Diese Konstruktion ermöglicht eine besonders platzsparende und kompakte Anordnung der Antriebsmittel in der Schließvorrichtung. Durch die Ausbildung eines Kolbenraums für den Aktivkolben im Ausgleichskolben kann zudem ein zusätzlicher Zylinder für den Aktivkolben entfallen. Eine Speisung des Kolbenraums für den Aktivkolben kann beispielsweise durch eine im Aktivkolben vorgesehene Längsbohrung erfolgen. Ein solcher Aktivkolben kann einen relativ kleinen Durchmesser aufweisen, da er im wesentlichen keine große Kräfte übertragen muss. Bei der Öffnungs- und Schließbewegung taucht der Aktivkolben in dem im Ausgleichskolben gebildeten Kolbenraum ein.

Die Antriebsmittel können gemäß einer anderen Ausgestaltung der Erfindung eine mit einer Spindelmutter im Eingriff stehende Spindel umfassen. Eine solche Spindel-Spindelmutter-Kombination kann eine Drehbewegung eines der beiden Elemente, also der Spindel oder der Spindelmutter, in eine Linearbewegung umsetzen, und kann insbesondere für schnelle Verfahrbewegungen zum Einsatz kommen. Über die Spindel-Spindelmutter-Kombination kann sowohl die Öffnungs- als auch die Schließbewegung der Schließvorrichtung gefahren werden, durch den Verzicht auf weitere hydraulische Verbraucher kann das Hydrauliksystem kleiner ausgelegt werden.

Insbesondere kann die Spindel an dem mindestens einen Ausgleichskolben angeordnet sein, während die Spindelmutter an einem Gehäuse und insbesondere an einem Deckel des mindestens einen Ausgleichszylinders drehbar gelagert ist. Durch diese Anordnung kann ein besonders platzsparender und kompakter Antrieb vorgestellt werden, der sowohl die Verfahrbewegung in Schließ- als auch die in Öffnungsrichtung übernehmen kann. Um die Spindel-Spindelmutter-Kombination in der Schließstellung bei Aufbringen des Schließdrucks nicht durch übermäßige Belastung zu beschädigen, kann zumindest eines der beiden Elemente mit Spiel angeordnet sein. So kann beispielsweise die Spindel mit geringem Spiel, beispielsweise über eine Ringfeder oder ähnliches an dem Ausgleichskolben angeordnet sein, oder aber die Lagerung der Spindelmutter axial geringfügig verschieblich gestaltet sein.

Alternativ kann die Spindel an dem Gehäuse und insbesondere an dem Deckel des mindestens einen Ausgleichszylinders drehbar gelagert sein, während die Spindel an dem Ausgleichskolben angeordnet ist und der Ausgleichskolben eine Ausnehmung aufweist, die derart ausgebildet ist, dass die Spindel in diese eintauchen kann. Hierbei kann ebenfalls die Spindel mit axialem Spiel gelagert sein und/oder aber die Spindelmutter an dem Ausgleichskolben leicht verschieblich angeordnet sein, beispielsweise durch Zwischenschaltung eines Federmechanismus, um eine Belastung der Spindel-Spindelmutter-Kombination beim Aufbringen der Schließkraft zu minimieren. Die Anordnung der Spindelmutter an dem Ausgleichskolben kann beispielsweise auf diesem aufgesetzt oder in diesen eingelassen erfolgen. Bei dieser Ausgestaltung ist im Ausgleichskolben eine Ausnehmung vorzusehen, in die die Spindelspitze bei axialer Relativbewegung zwischen Spindel und Spindelmutter eintauchen kann. Diese Ausgestaltungsform zeichnet sich durch eine besonders kompakte Bauweise aus, da die Spindel in den Ausgleichskolben eintaucht und nicht beispielsweise aus dem Gehäuse des Ausgleichszylinders ragt.

Je nach Ausgestaltung können auch mehrere Spindel-Spindelmutter-Kombinationen vorgesehen sein, so können bei Vorliegen mehrerer Ausgleichszylinder alle, einige oder nur ein einziger eine Spindel-Spindelmutter-Kombination aufweisen.

Zum Antreiben der Spindel bzw. der Spindelmutter kann vorteilhafterweise ein Elektromotor, und hier insbesondere ein Servomotor, vorgesehen sein. Ein Elektromotor weist eine geringe Trägheit auf, so dass eine schnelle Verfahrbarkeit und hohe Reaktionsgeschwindigkeit gewährleistbar sind. Durch die Verwendung eines Servomotors kann insbesondere eine exakte Ansteuerung, auch in örtlicher Hinsicht erfolgen.

Gemäß einer bevorzugten Ausgestaltung kann als Elektromotor ein Direktantrieb vorgesehen sein. Unter Direktantrieb wird hierbei ein Antrieb verstanden, dessen Abtriebsachse mit der Rotorachse übereinstimmt, wobei aber ggf. ein Getriebe, z. B. nach Art eines Planetengetriebes zwischengeschaltet sein kann. Direktantriebe zeichnen sich durch kompakte Bauweise und fehlenden Achsversatz aus. Für besondere Schnelllaufanwendungen können High-Torque-Direktantriebe zum Einsatz kommen.

Der Elektromotor kann bevorzugt an dem Gehäuse und insbesondere an dem Deckel des mindestens einen Ausgleichszylinders gehaltert sein. Hierdurch lässt sich eine besonders kompakte Anordnung gewährleisten.

Eine Pumpe zum Erzeugen des Schließdrucks kann an dem Elektromotor angeflanscht sein. Durch entsprechende Kupplungsmechanismen, Freiläufe oder ähnliche Vorkehrungen können durch den Elektromotor sowohl die Pumpe zum Erzeugen des Schließdrucks als auch die Spindel-Spindelmutter-Kombination zur Erzeugung der Verfahrbewegung antreibbar sein. Gemäß dieser Ausführungsform kann auf einen zusätzlichen Motor für den Pumpenantrieb verzichtet werden, was sich auch in den Kosten der Schließvorrichtung günstig niederschlägt.

Vorteilhaft an der erfindungsgemäßen Schließvorrichtung sind der einfache konstruktive Aufbau, der gleichzeitig eine besonders kompakte Ausgestaltung ermöglicht. Der einfache konstruktive Aufbau sowohl der mechanischen Komponenten als auch der Druckversorgung ermöglicht auch eine einfache Steuerung der erfindungsgemäßen Schließvorrichtung. Hierbei können im wesentlichen keine unerwünschten Schwingungseffekte auftreten, wodurch ein besonders sparsamer Betrieb derselben gewährleistet werden kann, da energieaufwendige Bedämpfungsmaßnahmen im wesentlichen entfallen können. Der einfache Aufbau und die gute Ansteuerbarkeit resultieren auch in einer besonders hohen Funktionssicherheit und geringen Wartungsintensität der erfindungsgemäßen Schließvorrichtung. Zudem kann aufgrund des einfachen Prinzips mit geringer Komplexität auf zusätzliche Sensoren und Aktoren, beispielsweise zum Regeln der Fluidmenge oder zum Erfassen der Drücke in bestimmten Bereichen weitgehend verzichtet werden. Im wesentlichen können anhand der Pumpensteuerung alle relevanten Signale bzw. Messwerte des Fluids aufgenommen und berücksichtigt werden, während Leckagen oder Überschüsse durch Verbindungen zur Pumpe bzw. zum Tank ausgleichbar sind. Die kompakte Bauweise ist insbesondere auch bei kleinen Maschinen von Vorteil.

Die der vorliegenden Erfindung gestellte Aufgabe wird auch durch ein Verfahren zum Betätigen einer Schließvorrichtung einer Spritzgießmaschine mit mindestens einem Schließzylinder und einem in diesem beweglich gelagerten Schließkolben sowie mindestens einem Ausgleichszylinder und einem in diesem beweglich gelagerten Ausgleichskolben gelöst, bei dem erfindungsgemäß beim Verfahren der Formaufspannplatte ein erster Kolbenraum des mindestens einen Schließzylinders mit einem Ausgleichsraum des mindestens einen Ausgleichszylinders in direkte Strömungsverbindung gebracht wird, so dass aus dem einen Raum verdrängtes Fluid im wesentlichen von dem zweiten Raum aufgenommen wird.

Vorteilhaft an diesem Verfahren ist das Vorsehen einer direkten Strömungsverbindung zwischen einem ersten Kolbenraum des mindestens einen Schließzylinders und einem Ausgleichsraum des mindestens einen Ausgleichszylinders, da hierdurch im Betrieb in den verschiedenen Kolbenräumen vorhandenes Fluid dem System im wesentlichen nicht verloren geht, sondern lediglich umgeschaufelt bzw. umgesetzt wird. Dies wirkt sich insbesondere auch vorteilhaft auf die Dimensionierung des für die Schließvorrichtung vorzusehenden Hydrauliksystems und die vorzusehende Pumpenleistung aus. Durch die direkte Strömungsverbindung können weiterhin Fluidtransfers über große Strecken vermieden und eine günstige Kraftbilanz erzielt werden. Erfindungsgemäß ist es möglich, dass beispielsweise ein Schließzylinder und zwei Ausgleichszylinder zusammenwirken, oder aber zwei Schließzylinder mit zwei Ausgleichszylindern, oder jeweils ein Schließzylinder mit jeweils einem Ausgleichszylinder. Insbesondere kann ein solches Verfahren auch mit einer erfindungsgemäßen Vorrichtung ausgeführt werden.

Entsprechend einer Weiterbildung des erfindungsgemäßen Verfahrens kann beim Verriegeln der Schließvorrichtung, also beim Aufbringen des Schließdrucks, die Strömungsverbindung zwischen dem ersten Kolbenraum des mindestens einen Schließzylinders und dem Ausgleichsraum des mindestens einen Ausgleichszylinders getrennt und der erste Kolbenraum des Schließzylinders mit Druck beaufschlagt werden. Vorteilhaft hieran ist, dass beim Verriegeln der erste Kolbenraum des Schließzylinders nur mit einer geringen Menge zusätzlichen Fluids, einem sogenannten Kompressionsteil, beaufschlagt werden muss, um einen ausreichend hohen Schließdruck zu erzeugen. Es ist also nicht erforderlich, eine Pumpe mit großem Fördervolumen hierfür zu verwenden, da der Großteil des im ersten Kolbenraum vorhandenen Fluids bei der Verfahrbewegung aus dem Ausgleichszylinder zurück in den Schließzylinder gefördert wurde und im System verbleibt. Hierdurch lässt sich die Energieaufnahme des Systems reduzieren. Auf eigene Drucksensoren im Bereich des ersten Kolbenraums kann insbesondere bei Verwendung einer Regelpumpe verzichtet werden, da auf eine Pumpensteuerung derselben zurückgegriffen werden kann, über die der entsprechende Druck ermittelbar ist.

Im Ausgleichsraum nach Trennen der Strömungsverbindung zum ersten Kolbenraum noch vorhandenes Fluid wird bei der Beaufschlagung des ersten Kolbenraums mit Druck geringfügig komprimiert. Es ist aber auch möglich, den Ausgleichsraum während dieser Zeit mit einem Tank bzw. einer Tankleitung des Hydrauliksystems zu verbinden, um einen übermäßigen Druckaufbau in ihm zu vermeiden und einen Druckausgleich zu ermöglichen. Der Ausgleichsraum kann auch im wesentlichen durchgängig oder zumindest während der Öffnungsbewegung mit dem Tank bzw. der Tankleitung verbunden werden, um Überschüsse, Volumenschwankungen oder eventuelle Leckagen auszugleichen.

Gemäß dem erfinderischen Verfahren kann beim Schließen der Schließvorrichtung ein Aktivkolbenraum mit Druck beaufschlagt und beim Öffnen derselben mit einem Tank bzw. einer Tankleitung verbunden werden. Mittels eines im Aktivkolbenraum beweglich gelagerten Aktivkolbens kann somit die Schließbewegung der Schließvorrichtung einfach und bei geringem Fluidbedarf erzielt werden.

Gemäß einer Ausgestaltung des erfindungsgemäßen Verfahrens kann beim Öffnen der Schließvorrichtung ein zweiter Kolbenraum des Schließzylinders mit Druck beaufschlagt werden. Dies kann beispielsweise bei einem lediglich einseitig wirkenden Aktivkolben von Vorteil sein, in Abhängigkeit von der Dimensionierung des zweiten Kolbenraums des Schließzylinders kann auch die Öffnungsbewegung mit geringem Fluidbedarf gefahren werden und sowohl Aktivkolbenraum als auch zweiter Kolbenraum des Schließzylinders können von derselben Druckquelle bedient werden.

Bei dem erfindungsgemäßen Verfahren kann die Verfahrbewegung der Schließvorrichtung beim Öffnen und Schließen derselben auch mittels einer Spindel-Spindelmutter-Kombination aufgebracht werden. Ein elektromotorisches Antreiben der Spindel-Spindelmutter-Kombination kann im wesentlichen sowohl im Hinblick auf die Geschwindigkeit als auch auf die benötigte Energie mit einem hydraulischen Verfahren konkurrieren. Vorteilhaft hieran ist, dass dadurch die Anzahl bzw. die Leistung der benötigten Pumpe bzw. Pumpen und somit die Komplexität des Hydrauliksystems reduziert werden können. Insbesondere bei Verwendung eines Servomotor kann zudem die Position der beweglichen Formaufspannplatte exakt angesteuert und genau festgestellt werden.

Im Folgenden soll die Erfindung anhand von beispielhaften Zeichnungen noch näher erläutert werden. Es zeigen in schematischer Form:
- **Fig. 1:**: eine erfindungsgemäße Schließvorrichtung in einem Leerlaufzustand,
- **Fig. 2:**: eine alternative Ausgestaltungsform in einem Verfahrzustand, sowie
- **Fig. 3:**: eine weitere alternative Ausgestaltungsform in einem Verfahrzustand.

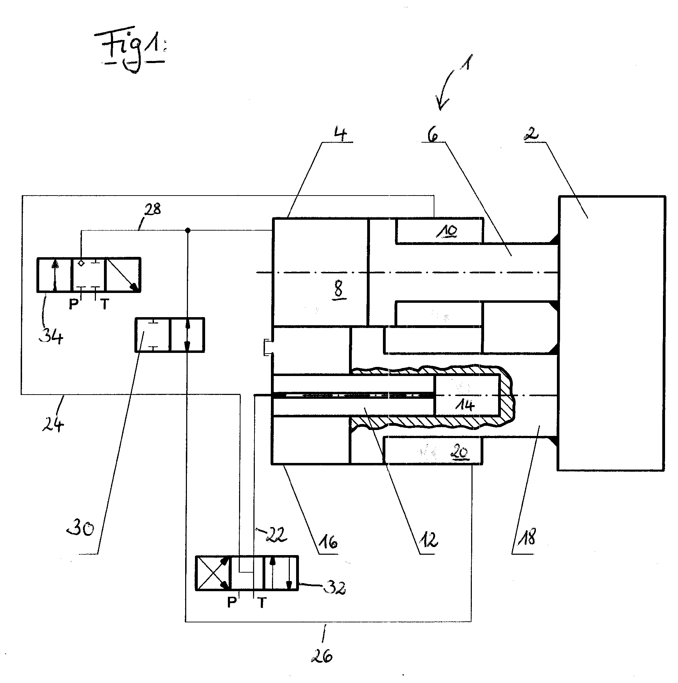

Fig. 1 zeigt eine Schließvorrichtung 1 für eine nicht näher dargestellte Spritzgießmaschine, die eine bewegliche Formaufspannplatte 2 aufweist, die beispielsweise an Holmen und/oder auf Schienen geführt sein kann. An der Formaufspannplatte 2 ist ein Schließkolben 6 befestigt, der in einem Schließzylinder 4 beweglich gelagert ist. Durch den Schließkolben 6 wird der Schließzylinder 4 in einen ersten Kolbenraum 8 und in einem zweiten Kolbenraum 10 aufgeteilt, die gegeneinander abgedichtet sind.

An der beweglichen Formaufspannplatte 2 ist des weiteren ein Ausgleichskolben 18 angebracht, der in einem Ausgleichszylinder 16 beweglich gelagert ist und mit diesem einen Ausgleichsraum 20 bildet, in dieser Ausgestaltung einen Ringkolbenraum. Der Schließzylinder 4 und der Ausgleichszylinder 16 sind miteinander verbunden bzw. an einer gleichen Halterung, beispielsweise einer Abstützplatte oder einem Maschinenbett angeordnet. Im Inneren des Ausgleichszylinders 18 ist ein Kolbenraum 14 ausgebildet, in den ein Aktivkolben 12 eintaucht. Der Aktivkolben 12 ist an einem Deckel des Ausgleichszylinders 16 befestigt und weist eine Längsbohrung auf, durch die der Kolbenraum 14 über eine Zuführleitung 22 mit Fluid versorgbar ist.

Über eine Versorgungsleitung 24 ist der zweite Kolbenraum 10 des Schließzylinders 4 ebenfalls mit Fluid versorgbar. Sowohl die Zuführleitung 22 als auch die Versorgungsleitung 24 sind über ein Mehrwegeventil 32 wechselweise mit einer Pumpe oder einem Tank oder aber auch gleichzeitig mit dem Tank verbindbar.

Der erste Kolbenraum 8 des Schließzylinders 4 und der Ausgleichsraum 20 des Ausgleichszylinders 16 sind über eine schaltbare Verbindungsleitung 26 verbunden. Ein Absperrventil 30 dient dem Trennen oder Herstellen der Verbindung. Der erste Kolbenraum 8 des Schließzylinders 4 und der Ausgleichsraum 20 des Ausgleichszylinders 16 sind derart ausgestaltet, dass sie bei einer Verfahrbewegung der Kolben 6, 18 und somit der Formaufspannplatte 2 gegenüber den Zylindern 4, 16 im wesentlichen entgegengesetzt gleiche Volumenänderungen aufweisen. Somit kann aus einem Kolbenraum bei einer Verfahrbewegung verdrängtes Fluid im wesentlichen durch den anderen Kolbenraum aufgenommen werden, ohne dass es zu Druckspitzen oder Verlusten kommt.

Über eine Druckleitung 28 kann der ersten Kolbenraum 8 des Schließzylinders 4 wahlweise mit Druck von einer Pumpe beaufschlagt, abgeschottet oder mit einem Tank verbunden werden. Dies erfolgt über ein Mehrwegeventil 34.

Zum Verfahren der beweglichen Formaufspannplatte 2 in Schließrichtung, das ist in der Fig. 1 nach rechts, wird das Mehrwegeventil 32 derart geschaltet, dass die Zuführleitung 22 mit der Pumpe verbunden ist und die Versorgungsleitung 24 mit dem Tank. Gleichzeitig werden der erste Kolbenraum 8 des Schließzylinders 4 und der Ausgleichsraum 20 des Ausgleichszylinders 16 über die Verbindungsleitung 26 in Strömungsverbindung gebracht, hierbei ist das Absperrventil 30 offen, während das Mehrwegeventil 34 die Druckleitung 28 sowohl von Pumpe wie auch vom Tank abschottet. Durch Beaufschlagen des Kolbenraums 14 des Aktivzylinders 12 mit Druck über die Zuführleitung 22 werden die Formaufspannplatte 2 und die über sie zwangsgekoppelten Kolben 6 und 18 nach rechts verfahren. Durch die Verfahrbewegung wird der Ausgleichsraum 20 verkleinert, während sich der erste Kolbenraum 8 vergrößert. Aus dem Ausgleichsraum 20 verdrängtes Fluid wird somit im wesentlichen in den ersten Kolbenraum 8 umgesetzt. Hierdurch ist durchgängig eine gleichmäßige Füllung des Ausgleichsraums 20 und des ersten Kolbenraums 8 gewährleistet, es kann zu keiner Schwingung der Fluidsäulen oder ähnlichem kommen, da die Kolben 6, 18 fest verbunden sind.

Sobald die bewegliche Formaufspannplatte 2 die Schließstellung, den sogenannten Formschluss, erreicht hat, beginnt der Schließdruckaufbau, auch Verriegelungsphase genannt. In dieser Phase wird das Absperrventil 30 geschlossen und die Verbindung zwischen dem ersten Kolbenraum 8 des Schließzylinders 4 und dem Ausgleichsraum 20 getrennt. Sowohl der Kolbenraum 14 des Aktivkolbens 12 als auch der zweite Kolbenraum 10 des Schließzylinders 4 werden durch entsprechende Schaltung des Mehrwegeventils 32 mit dem Tank verbunden. Zusätzlich kann der Ausgleichsraum 20 über ein nicht dargestelltes Ventil mit einer Tankleitung des Hydrauliksystems verbunden werden. Sodann wird das Mehrwegeventil 34 derart geschaltet, dass die Druckleitung 28 von einer Pumpe mit Druck beaufschlagt wird, und somit aufgrund des geschlossenen Absperrventils 30 im ersten Kolbenraum 8 der Schließdruck aufgebracht wird.

Zum Öffnen der erfindungsgemäßen Schließvorrichtung 1 wird das Absperrventil 30 geöffnet, so dass eine Strömungsverbindung zwischen dem ersten Kolbenraum 8 und dem Ausgleichsraum 20 besteht. Das Mehrwegeventil 34 wird geschlossen, die Druckleitung 28 also abgeschottet, während eine Verbindung des Ausgleichsraums 20 zu einer Tankleitung beibehalten wird. Alternativ kann auch über das Mehrwegeventil 34 eine Verbindung zwischen Druckleitung 28 und der Tankleitung hergestellt werden, so dass überschüssiges Fluid abgeführt werden kann. Sodann wird durch entsprechende Stellung des Mehrwegeventils 32 die Zuführleitung 22 zum Kolbenraum 14 des Aktivzylinders 12 mit einer Tankleitung des Hydrauliksystem und der zweite Kolbenraum 10 des Schließzylinders 4 mit einer Pumpe bzw. einer Druckleitung desselben verbunden. Durch den resultierenden Druckaufbau im Ringraum 10 des Schließzylinders 4 wird eine Verfahrbewegung der beweglichen Formaufspannplatte 2 in der Fig. 1 nach links bewirkt.

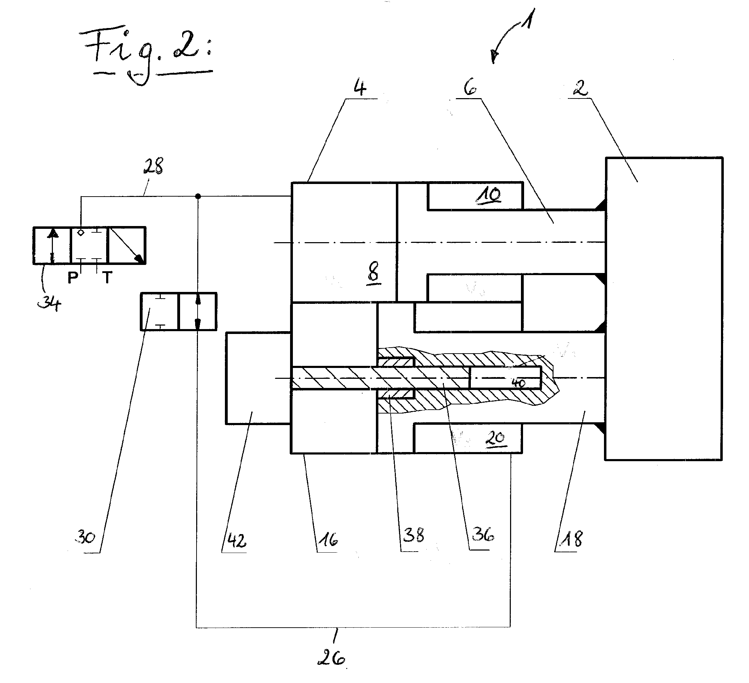

In Fig. 2 ist eine alternative Ausgestaltungsform der vorliegenden Erfindung schematisch dargestellt, in der entsprechende Elemente dieselben Bezugszeichen behalten. Bei dieser Ausführungsform wird die Verfahrbewegung durch eine Spindel-Spindelmutter-Kombination und nicht durch hydraulisch betätigbare Antriebsmittel erzeugt. Hierzu ist eine Spindel 36 an einem Deckel des Ausgleichszylinders 16 drehbar gelagert und steht im Eingriff mit einer Spindelmutter 38, die an dem Ausgleichszylinder 18 angeordnet ist. Hierbei ist die Spindelmutter 38 vorteilhafterweise mit einem leichten Spiel mit dem Ausgleichskolben 18 verbunden. Die Spindel 36 kann in eine Ausnehmung 40 eintauchen, die im Ausgleichskolben 18 für sie vorgesehen ist.

Ein Direktantrieb 42 treibt die Spindel 36 rotatorisch an. Durch die Rotation der Spindel 36, die im Eingriff mit der Spindelmutter 38 steht, kommt es zu einer axialen Verschiebung des Ausgleichskolbens 18 relativ zu einem Ausgleichszylindergehäuse 16. Gleichzeitig mit dem Ausgleichskolben 18 werden auch die mit diesem fest verbundene Formaufspannplatte 2 sowie der Schließkolben 6 bewegt. In dieser Ausführungsform enthalten weder der Kolbenraum des Ausgleichszylinders, der von der Spindel 36 durchstoßen wird, noch die Ausnehmung 40 im Ausgleichskolben 18 noch der zweite Kolbenraum 10 des Schließkolbens 4 ein Hydraulikfluid. Lediglich ein erster Kolbenraum 8 des Schließzylinders 4 und ein Ausgleichsraum 20 des Ausgleichszylinders 16 sind mit Fluid befüllt und über eine schaltbare Verbindungsleitung 26 direkt verbindbar.

Bei einer Verfahrbewegung der Formaufspannplatte 2 wird durch Öffnen des Absperrventils 30 die Strömungsverbindung zwischen dem ersten Kolbenraum 8 und dem Ausgleichsraum 20 hergestellt, während die Druckleitung 28 vom Hydrauliksystem durch entsprechende Schaltung des Mehrwegeventils 34 abgeschottet wird. Insbesondere bei einer Öffnungsbewegung kann das Mehrwegeventil 34 auch eine Verbindung der Druckleitung 28 zum Tank herstellen, um überschüssiges Fluid abzuführen. Eine solche Verbindung kann auch zwischen dem Ausgleichsraum 20 direkt und einer Tankleitung vorgsehen sein, dies ist nicht näher dargestellt. Durch Betätigen der Spindel 36 wird sodann eine Verfahrbewegung der Formaufspannplatte 2 hervorgerufen, deren Richtung vom Drehsinn der Spindel abhängt. Mit der Verfahrbewegung geht ein Fluidtransport vom ersten Kolbenraum 8 über die Verbindungsleitung 26 in den Ausgleichsraum 20 bzw. entgegengesetzt einher. Sobald die Formaufspannplatte 2 eine Schließstellung, in Fig. 2 eine rechte Endposition, erreicht hat, beginnt das Verriegeln. Hierzu wird das Absperrventil 30 geschlossen und die Druckleitung 28 über das Mehrwegeventil 34 mit Druck beaufschlagt. Aufgrund der Anordnung der Spindelmutter 38 mit Spiel relativ zum Ausgleichskolben 18 bzw. der Spindel 36 mit Spiel in axialer Richtung relativ zum Ausgleichszylinder 16 kann eine Beschädigung der Spindel-Spindelmutter-Kombination bzw. des Antriebs insgesamt beim Aufbringen des Schließdrucks vermieden werden. Der Ausgleichsraum 20 ist während dieser Zeit mit einer Tankleitung verbunden. Bei einer darauf folgenden Öffnungsbewegung wird neuerlich die Druckleitung 28 vom Hydrauliksystem abgeschottet, und das Absperrventil 30 in der Verbindungsleitung 26 geöffnet, die Verbindung zwischen Tankleitung und Ausgleichsraum 20 aber beibehalten. Alternativ kann diese Verbindung unterbrochen und die Druckleitung mit der Tankleitung verbunden werden.

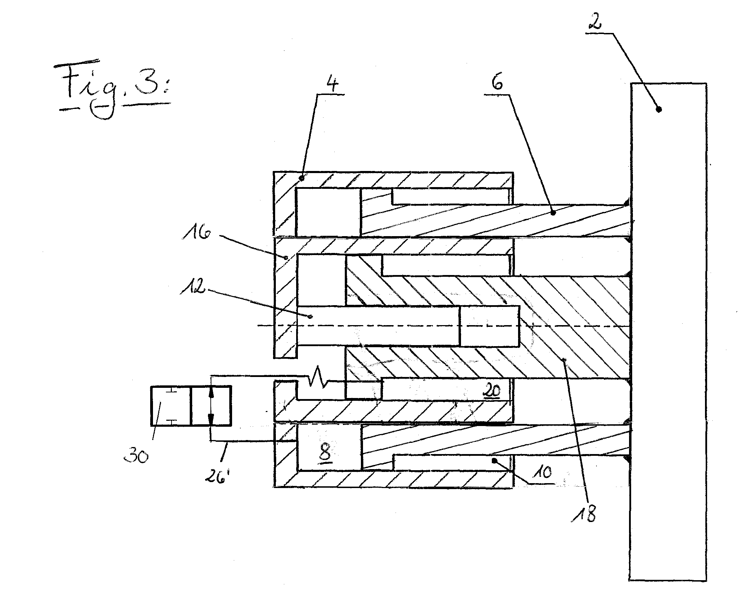

Gemäß der alternativen Ausgestaltungsform, die schematisch in Fig. 3 dargestellt ist und bei der entsprechende Elemente dieselben Bezugsziffern behalten, ist eine symmetrische Anordnung von Ausgleichszylinder 16 bzw. Ausgleichskolben 18 zu Schließzylinder 4 und Schließkolben 6 vorgesehen. Auch hier sind der Schließkolben 6 und der Ausgleichskolben 18 über die bewegliche Formaufspannplatte 2 zwangsgekoppelt. Der Schließzylinder 4 ist konzentrisch zum Ausgleichszylinder 16 angeordnet. Die Verfahrbewegung wird durch einen Aktivzylinder 12 bzw. den Schließzylinder 6 bewirkt, wie dies für die Ausgestaltung gemäß Figur 1 beschrieben ist. Alternativ könnte auch eine mit einer Spindelmutter 38 zusammenwirkende Spindel 36 vorgesehen werden. Eine Verbindungsleitung 26' verbindet den Ausgleichsraum 20 durch einen zweiten Kolbenraum des Ausgleichszylinders 16 mit dem ersten Kolbenraum 6 des Schließzylinders, der hier als Ringraum ausgestaltet ist. Die Verbindungsleitung 26' ist längenveränderlich. Die Verbindungsleitung könnte beispielsweise auch in der Form von Längsbohrungen im Ausgleichskolben 18 sowie im Schließkolben 6 ausgeführt sein, die in einem freien Bereich, durch ein Verbindungsstück verbunden sind. Durch die symmetrische Ausgestaltung der erfindungsgemäßen Schließvorrichtung 1 gemäß Figur 3 kann eine besonders vorteilhafte Kraftbilanz erzielt werden.

Die erfindungsgemäße Schließvorrichtung sowie das Verfahren zum Betreiben einer Schließvorrichtung ist besonders einfach und kompakt in der Bauweise, die Schließvorrichtung sowie das erfindungsgemäße Verfahren zum Betreiben einer Schließvorrichtung sind leicht zu steuern und weisen einen geringen Energieverbrauch auf. Zudem ist eine hohe Funktionssicherheit und geringe Wartungsintensität gewährleistet, was insbesondere auch durch den konstruktiv einfachen Aufbau bedingt ist.

### Bezugszeichenliste

- 1: Schließvorrichtung
- 2: bewegliche Formaufspannplatte
- 4: Schließzylinder
- 6: Schließkolben
- 8: erster Kolbenraum
- 10: zweiter Kolbenraum
- 12: Aktivzylinder
- 14: Aktivzylinderkolbenraum
- 16: Ausgleichszylinder
- 18: Ausgleichskolben
- 20: Ausgleichsraum
- 22: Zuführleitung
- 24: Versorgungsleitung
- 26, 26': Verbindungsleitung
- 28: Druckleitung
- 30: Absperrventil
- 32: Mehrwegeventil
- 34: Mehrwegeventil
- 36: Spindel
- 38: Spindelmutter
- 40: Ausnehmung
- 42: Direktmotor

## Patentansprüche

1. Schließvorrichtung für eine Spritzgießmaschine mit einer beweglichen Formaufspannplatte (2), die Antriebsmittel zum Verfahren der beweglichen Formaufspannplatte (2) in mindestens einer Richtung aufweist, und mindestens einen Schließzylinder (4) und einen in diesem beweglich gelagerten Schließkolben (6) sowie mindestens einen Ausgleichszylinder (16) und einen in diesem beweglich gelagerten Ausgleichskolben (18),
**dadurch gekennzeichnet, dass**
eine direkte, schaltbare Verbindung zwischen einem ersten Kolbenraum (8) des mindestens einen Schließzylinders (4) und einem Ausgleichsraum (20) des mindestens einen Ausgleichszylinders (16) vorgesehen ist.

2. Schließvorrichtung nach Anspruch 1,
**dadurch gekennzeichnet, dass**
der erste Kolbenraum (8) des mindestens einen Schließzylinders (4) und der Ausgleichsraum (20) des mindestens einen Ausgleichszylinders (16) über eine, insbesondere mittels eines Absperrventils (30), schaltbare Verbindungsleitung (26) verbindbar sind.

3. Schließvorrichtung nach Anspruch 1 oder 2,
**dadurch gekennzeichnet, dass**
der mindestens eine Schließzylinder (4) und der darin beweglich gelagerte Schließkolben (6) sowie der mindestens eine Ausgleichszylinder (16) und der darin beweglich gelagerte Ausgleichskolben (18) derart ausgebildet sind, dass eine Volumenänderung des Ausgleichsraums (20) bei einem Verfahren der beweglichen Formaufspannplatte (2) entgegengesetzt zu einer Volumenänderung des ersten Kolbenraums (8) des Schließzylinders (4) ist.

4. Schließvorrichtung nach Anspruch 3,
**dadurch gekennzeichnet, dass**
die Volumenänderung des Ausgleichsraums (20) im wesentlichen entgegengesetzt identisch zu der Volumenänderung des ersten Kolbenraums (8) ist.

5. Schließvorrichtung nach einem der Ansprüche 1 - 4,
**dadurch gekennzeichnet, dass**
der mindestens eine Schließkolben (6) und der mindestens eine Ausgleichskolben (18) insbesondere über die Formaufspannplatte (2) fest gekoppelt sind.

6. Schließvorrichtung nach einem der Ansprüche 1 - 5,
**dadurch gekennzeichnet, dass**
ein Mehrwegeventil (34) vorgesehen ist, mittels dessen der erste Kolbenraum (8) des mindestens einen Schließzylinders (4) über eine Druckleitung (28) mit Druck zum Erzeugen eines Schließdruckes beaufschlagbar oder mit einem Tank verbindbar oder abschottbar ist.

7. Schließvorrichtung nach einem der Ansprüche 1 - 6,
**dadurch gekennzeichnet, dass**
ein zweiter Kolbenraum (10) des mindestens einen Schließzylinders (4) über eine Versorgungsleitung (24) wahlweise mit Druck insbesondere zum Erzeugen einer Öffnungsbewegung beaufschlagbar oder mit einem Tank verbindbar ist.

8. Schließvorrichtung nach einem der Ansprüche 1 - 7,
**dadurch gekennzeichnet, dass**
die Antriebsmittel einerseits an einem Gehäuse - insbesondere einem Deckel - des mindestens einen Ausgleichszylinders (16) und andererseits an dem mindestens einen Ausgleichskolben (18) angreifen.

9. Schließvorrichtung nach einem der Ansprüche 1 - 8,
**dadurch gekennzeichnet, dass**
die Antriebsmittel einen Aktivkolben (12) umfassen.

10. Schließvorrichtung nach Anspruch 8 und 9,
**dadurch gekennzeichnet, dass**
der Aktivkolben (12) mit dem Gehäuse - insbesondere dem Deckel - des mindestens einen Ausgleichszylinders (16) verbunden und für den Aktivkolben (12) in dem mindestens einen Ausgleichskolben (18) ein Kolbenraum (14) ausgebildet ist.

11. Schließvorrichtung nach Anspruch 10,
**dadurch gekennzeichnet, dass**
ein Mehrwegeventil (32) vorgesehen ist, über das wahlweise eine Zuführleitung (22) zum Kolbenraum (14) des Aktivkolbens (12) mit Druck beaufschlagbar und die Versorgungsleitung (24) zum zweiten Kolbenraum (10) des mindestens einen Schließzylinders (4) mit dem Tank verbindbar ist oder die Versorgungsleitung (24) mit Druck beaufschlagbar und die Zuführleitung (22) mit dem Tank verbindbar ist oder sowohl Zuführleitung (22) als auch Versorgungsleitung (24) mit dem Tank verbindbar sind.

12. Schließvorrichtung nach einem der Ansprüche 1-8,
**dadurch gekennzeichnet, dass**
die Antriebsmittel eine mit einer Spindelmutter (38) im Eingriff stehende Spindel (36) umfassen.

13. Schließvorrichtung nach Anspruch 8 und 12,
**dadurch gekennzeichnet, dass**
die Spindel (36) an dem mindestens einen Ausgleichskolben (18) angeordnet ist und die mindestens eine Spindelmutter (38) an dem Gehäuse und insbesondere an dem Deckel des mindestens einen Ausgleichszylinders (16) drehbar gelagert ist.

14. Schließvorrichtung nach Anspruch 8 und 12,
**dadurch gekennzeichnet, dass**
die Spindel (36) an dem Gehäuse und insbesondere an dem Deckel des mindestens einen Ausgleichszylinders (16) drehbar gelagert ist, die Spindelmutter (38) an dem Ausgleichskolben (18) angeordnet ist und der Ausgleichskolben (18) eine Ausnehmung (40) aufweist, die derart ausgebildet ist, dass die Spindel (36) in sie eintauchen kann.

15. Schließvorrichtung nach einem der Ansprüche 12 - 14,
**dadurch gekennzeichnet, dass**
zum Antreiben der Spindel (36) bzw. der Spindelmutter (38) ein Elektromotor (42), insbesondere ein Servomotor, vorgesehen ist.

16. Schließvorrichtung nach Anspruch 15,
**dadurch gekennzeichnet, dass**
als Elektromotor (42) ein Direktantrieb vorgesehen ist.

17. Schließvorrichtung nach Anspruch 15 oder 16,
**dadurch gekennzeichnet, dass**
der Elektromotor (42) an dem Gehäuse und insbesondere an dem Deckel des mindestens einen Ausgleichszylinders (16) gehaltert ist.

18. Schließvorrichtung nach einem der Ansprüche 15 - 17,
**dadurch gekennzeichnet, dass**
eine Pumpe zum Erzeugen des Schließdrucks an dem Elektromotor (42) angeflanscht ist.

19. Verfahren zum Betätigen einer Schließvorrichtung (1) einer Spritzgießmaschine mit mindestens einem Schließzylinder (4) und einem in diesem beweglich gelagerten Schließkolben (6) sowie mindestens einem Ausgleichszylinder (16) und einem in diesem beweglich gelagerten Ausgleichskolben (18),
**dadurch gekennzeichnet, dass**
beim Verfahren der Formaufspannplatte (2) ein erster Kolbenraum (8) des mindestens einen Schließzylinders (4) mit einem Ausgleichsraum (20) des mindestens einen Ausgleichszylinders (16) in direkte Strömungsverbindung gebracht wird, so dass aus dem einen Raum verdrängtes Fluid im wesentlichen von dem zweiten Raum aufgenommen wird.

20. Verfahren nach Anspruch 19,
**dadurch gekennzeichnet, dass**
beim Verriegeln der Schließvorrichtung (1) die Strömungsverbindung zwischen dem ersten Kolbenraum (8) des mindestens einen Schließzylinders (4) und dem Ausgleichsraum (20) des mindestens einen Ausgleichszylinders (16) getrennt und der erste Kolbenraum (8) des Schließzylinders (4) mit Druck beaufschlagt wird.

21. Verfahren nach Anspruch 19 oder 20,
**dadurch gekennzeichnet, dass**
beim Öffnen der Schließvorrichtung (1) ein zweiter Kolbenraum (10) des Schließzylinders (4) mit Druck beaufschlagt wird.

22. Verfahren nach einem der Ansprüche 19 - 21,
**dadurch gekennzeichnet, dass**
ein Aktivkolbenraum (14) beim Schließen der Schließvorrichtung mit Druck beaufschlagt und beim Öffnen mit einem Tank verbunden wird.

23. Verfahren nach einem der Ansprüche 19 - 21,
**dadurch gekennzeichnet, dass**
die Verfahrbewegung beim Öffnen und Schließen der Schließvorrichtung mittels einer Spindel-Spindelmutter-Kombination aufgebracht wird.
